Europäisches Patentamt

European Patent Office

Office européen des brevets

(19)

(11) Publication number: **0 207 007**

**A2**

(12)

# EUROPEAN PATENT APPLICATION

(21) Application number: **86830093.0**

(22) Date of filing: **18.04.86**

(51) Int. Cl.⁴: **B65D 51/28** , B65D 81/32

---

The title of the invention has been amended (Guidelines for Examination in the EPO, A-III, 7.3).

(30) Priority: **23.04.85 IT 4798785**

(43) Date of publication of application:
**30.12.86 Bulletin 86/52**

(84) Designated Contracting States:
**AT BE CH DE FR GB IT LI LU NL SE**

(71) Applicant: **Caruson, Domenico**
**Via Deruta, 13**
**I-00181 Roma(IT)**

(72) Inventor: **Caruson, Domenico**
**Via Deruta, 13**
**I-00181 Roma(IT)**

(74) Representative: **Sneider, Massimo**
**Lenzi & C. Via Lucania, 13**
**I-00187 Roma(IT)**

---

(54) **Production and storage of a coffee infusion with other, optional substances.**

(57) The metod is as follows : a coffee infusion is prepared, having the right strength and taste, without any addition of sweeteners and/or other possible additives; the infusion is subjected to dewaxing and pasteurizing, then is introduced into a container, preferibly dark in colour, in order to prevent the action of the light upon its content, and the container is hermetically sealed, keeping in mind that the dewaxing and pasteurizing actions can be effected according to any desired order. The closing member (2) contains, in a portion (3) of itself, a capsule (8), or else it constitutes the capsule itself, possibly formed by, or subdivided by, walls (10) into more containers, apted to contain the substances to be optionally added to the infusion, at the moment of its utilization.

**"A method for the production and storage of a coffee infusion and a container's closure device, apted also to allow the addition extemporaneous, optional, of other substances".**

It is know that a coffee infusion, duly sweetened, cannot be stored ready to use for an average or long time, even if pasteurized, notwithstanding the employment of hermetically sealed containers. That is, an oxydation process takes place whitin the coffee infusione, process which is caused by the components of coffee and sugar, which causes the alteration or deterioration of the infusion within relatively short times.

Presently, therefore, it is not possible to produce industrially a coffee infusion ready to the use.

Following careful and prolonged studies, it has been observed that the coffee infusion, if additive exempt, such as the sweeteners and in particulars the sugar, and suitable treated, can be stored for a long time in containers, preferably dark-coloured containers, which must be hermetically sealed.

However, it is not commercially interesting to manufacture and serve a coffe infusion to which one must successively add a sweetener or other substance, withdrawing it from a separate container, specially if the beverage is sipped from the container itself, as it happens presently with other beverage.

An object of the present invention is a method for preparing a long-storage coffee infusion.

Another object of the present invention is a closure member for the container in which a coffee infusion is contained, the closure member housing a sweetener or other additive and keeping it separate from the container's content until the moment of the beverage consumption.

A further object of the invention is to allow the opening of the container and the beverage's consumption independently from the pouring of the additional substance, such for instance the sweetener, in it.

These and other objects and advantages will appear more evident from following detailed description of some of its embodiments.

Brief Description of the Drawings

Fig. 1 shows a view of the container, complete with the closure member, according to a side view;

Fig. 2 shows, in a view from outside, one of the two parts forming the plugging or closure member, said part being apted to store an additive;

Fig. 3 shows the second part of the plugging member according to a side view;

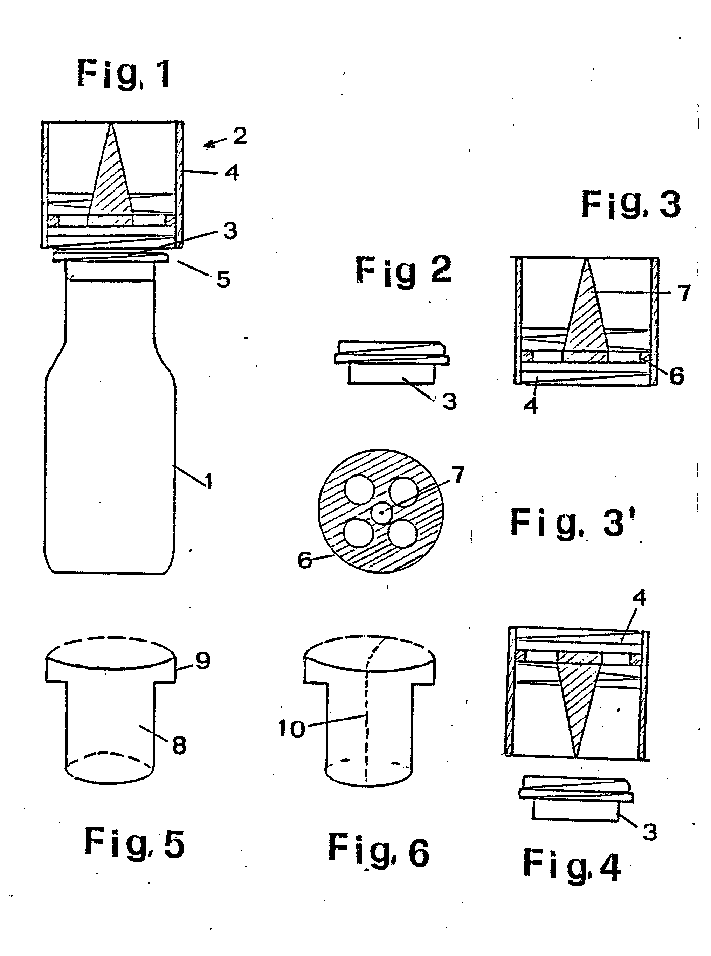

Fig. 3' shows the second part of the plugging member according to a plan view;

Fig 4 shows the two portions of the plugging member in the assemblying phase for the perforation of the additive's container;

Fig. 5 shows an additive's container, acting also as a plugging and guarantee;

Fig. 6 shows a variant of the plugging and guarantee member.

Detailed Description

According to the invention, the method consists of the following: to prepare a coffee infusion having the right strength and taste, without adding to the infusion sweeteners, as sugats, and/or other possible additives; to subject it to dewaxing; to pasteurize it; and, after introducing it into a container, preferably dark-coloured, in order to prevent the action of the light upon the content, to seal hermetically the container. Naturally, the dewaxing and pasteurizing operations can be effected according to any desired order.

As it as been said, a further object of the invention is to provide means for plugging the container, said means being in condition to contain and deliver, at will, an additive substance, such as a sweetner, an aromatizing substance or other. As it appears from Fig. 1, the container 1, in its preferred embodiment, is provided with a plugging member or plug, generally indicated by 2, kept applied to the container 1, by means of a guarantee and plugging clip 5. As it can be seen from Figures 2 to 4, the plugging member 2 is made of two portions 3 and 4, wich can be bound together, and of wich portion 3 is locked to the container 1 by means of the gurantee clip 5.

The portion 3 of the plugging member 2 is shaped as a container and may contain, directly or indirectly, one or more substances to be added to the coffee contained in the container 1 at the moment of use. The portion 3 is closed both at the top and at the bottom by a perforable membrane which separates the substance to be added both from the content of the container (coffee infusion) and from the outside. The two membranes may also constitute, by themselves, as better illustrated in Figures 5 and 6, the container of the substance to be added and the sealing gasket between the container and the plugging member 2 or similar.

The second portion 4 of the plugging member 2 is divided into two parts by trasversal baffle 6, one portion being provided with a wedge appendix 7 and the inner surfaces, in which said portion is divided by the baffle 6, being each provided with a screw thread apted to permit the housing of the portion 4 both with the wedge 7 looking upwards and with the wedge 7 looking downwards.

In the storing condition of the container 1 filled with the coffee infusion treated as above, the conical end 7 is oriented away from the lower portion 3 of the plug or, in any case, from the caspule containing the substance to be added, the upper membrane representing also a seal. At the moment of use, the portion 4 of the plugging member 2 is removed from its starting position and the wedge appendix 7 is brought into a contact successively with the two sealing membranes wich close the lower portion 3 of the plug, forming the container of the additive. With such action, the substance contained in the first portion 3 of the plug, or in the capsule, finds free way to fall inside the container 1, mixing with the coffee infusion.

Until now we have spoken about substances to be added to the coffe infusion. It is to observe that such substance can be of any type, both solid and in powder form in order to facilitate its solution into the underlying liquid, as sugar, preferably sugar-coating, or other sweetener, or in a liquid form as milk, alcohol, under for instance, of cognac or other.

In a variant wich is schematically illustrated in Fig. 5, the lower portion of the plugging member 2 is substituted by a true and proper capsule 8, provided with a rim 9 wich effects a sealing upon the container's rim. In this case, any suitable plug or stopper, as a folded-seam stopper, may be employed to plug the container, keeping in mind that in such case the preforation of capsule must be effected by external means.

By the above-indicated embodiment it is possible, according to the invention, to foresee the extemporaneous optional introduction of two or more different additives, such for istance milk and sugar. In such a case, one or more partition walls 10 in vertical position, divide the capsule 8 into separated containers, whose perforation allows, singly, the transfer of each substance into the cofee infusion. Naturally, the employment of separate compartments may also be adopted in the embodiment which is illustrated in Figures 2 to 4; in such a case, the wedge 7 of Figure 3 will serve to perforate all the compartments or only some of them, according to its position.

In the exemplary embodiment of the plugging member represented in the Figures 2 to 4, the two portions 3 and 4 are provided with steep-pitch threadings, so that their mutual coupling and release may take palce with a limited rotation. Naturally, also other tying solutions may be provided.

The adoption of the invention allows to take a beverage of cold coffee, in particular in the bars and bublic premises, which is not subjected to manipulations or adulterations, as presently happens; to sweeten the beverage only if this is desired; it ensure the right dose of coffee and right dose of beverage, with a guarantee against possible adulterations.

The plugging device of the invention, as said, allows the extemporaneus addition of one or more substances which are kept separated from liquid to which they must added until the moment of use. Optionally, the plugging member may contain lyophilized substances or substances of type wich gets an extremely quick solution into the liquid contained in the underlying container, wherein the liquid may be also wather.

The method for the production and keeping - (storing) of a coffee infusion, and plugging device for the container, apted also to allow the extemporaneus addition of other substances, may be intended for other beverages wich present equal or similar features with respect to those of the coffee infusion, and may be realized according to other embodiments which differ only in details from those which have been indicated solely by way of example.

## Claims

1. A method for the production and the storing of a coffee infusion, consisting of that a coffee infusion is prepared, having the rigth strength and taste, withoth any addition of sweeteners, such as sugar, and/or other possible additives; the infusion is subjected to dewaxing and pasteurizing, is introduced into a container, preferably dark-coloured, in order to prevent the action of the light upon the content, and the container is hermetically sealed; the dewaxing and pasteurizing actions me be effected according to any desired order.

2. A closure or plugging device for a container (1) of a coffee infusion or similar, characterized by that the plugging member (2) is made of two parts (3 and 4) which may be tied togheter, and by that the portion (3) is locked to the conatiner (1) by means of guarantee's clip (5), and is shaped as a container and contains, directly or indirectly, one or more substances to be added extemporaneously and optionally to the coffee infusion.

3. A plugging device for a container (1) of a coffee infusion or simila according to Claim 2, charaterized by that (3) is closed both at the top and the bottom by a membrane which can be easily perforated, wich separates the substance to add, both from the container's content and from the external ambient; the two membranes may also constitute by themselves the container of the substance to be added and the sealing gasket between the container (1) and the plugging member (2) or similar.

4. A plugging device for a container (1) of a coffee infusion or similar according to Claims 2, characterized by that the second portion (4) of the plugging member (2) is divided into two portion by a trasversal baffle (6) provided on one of its faces with a wedge appendix or projection (7), the inner mantle of each of these portions being provided with a threading apted to permit the connection of the portion (4) with the portion (3) both with the wedge (7) looking upwards and with the wedge (7) looking downwards, with the latter positioning the substance contained in the first portion (3) of the plug or stopper, or in the capsule, finding a free way to fall inside the container (1), thus mixing with the coffee infusion.

5. A plugging device for a container (1) of a coffee infusion or similar according to Claim 2, charaterized by that the plugging device (2) is constituted by a capsule (8) provided with a rim - (9) forming a seal on the rim of the container, and by any suitable stopper, such as a folded-seam stopper, in which case the capsule's perforation must be effected by means separated from the plugging member.

6. A plugging device for a container (1) of cofffee infusion or similar according to one or more of the previous Claims, characterized by that one or more vertical partition walls (10) divide the capsule (3, 8) in separate containers containing different additive materials.

0 207 007

Fig. 1

Fig 2

Fig. 3

Fig. 3'

Fig. 5

Fig. 6

Fig. 4